# EUROPÄISCHE PATENTSCHRIFT

(11) **EP 0 685 360 B1**
(45) Veröffentlichungstag und Bekanntmachung des Hinweises auf die Patenterteilung: **29.07.1998**
(21) Anmeldenummer: 95107367.5
(22) Anmeldetag: 16.05.1995
(51) Int. Cl.: B60P 1/00

(54) **Lastfahrzeug**
Utility vehicle
Véhicule utilitaire

(30) Priorität: 01.06.1994 DE 9408962 U
(43) Veröffentlichungstag der Anmeldung: 06.12.1995
(73) Patentinhaber: Wagner, Ewald, 66606 St. Wendel-Bliesen (DE)
(72) Erfinder: Wagner, Ewald, 66606 St. Wendel-Bliesen (DE)
(74) Vertreter: Bernhardt, Winfrid, Dr.-Ing.

(56) Entgegenhaltungen:
- EP-A- 0 360 235
- DE-U- 9 216 452
- US-A- 3 346 132
- US-A- 4 249 843

## Beschreibung

Die Erfindung betrifft ein Lastfahrzeug, insbesondere einen Lastkraftwagen oder Sattelaufleger, mit einer Vorderwand oder Zwischenwand, die zum Ausschieben des Gutes auf dem Ladeboden nach hinten und wieder zurück mittels eines Antriebs verschiebbar ist, wobei ihre Ausrichtung durch eine Führung erhalten bleibt, die aus mindestens zwei an der Vorderwand bzw. Zwischenwand angebrachten Schuhen, insbesondere Gleitschuhen, und an dem übrigen Fahrzeugaufbau angeordneten Schienen besteht, mit denen die Schuhe zusammenwirken.

Ein solches Lastfahrzeug ist aus der EP-A-0 360 235 bekannt. Die Schienen haben dort die Form etwa in halber Höhe an den Seitenwänden des Lastfahrzeuges verlaufender Kastenprofile, die Gleitschuhe fassen mit einem U-Profil darauf. Zusätzlich ist die Vorderwand abgestützt und ausgerichtet durch oben auf den Rändern der Seitenwände laufende Rollen. Als Kraftübertragungsmittel für die Verschiebung dienen zwei jeweils unmittelbar unter den Schienen an der Vorderwand angreifende, am hinteren Ende des Fahrzeugs nach unten umgelenkte und zu einer Zugeinrichtung geführte Ketten. Die Ketten liegen frei im Laderaum und sind damit, je nach Gut, der Verschmutzung durch dieses oder der Kollision mit ihm ausgesetzt.

Aus der DE-U-92 16 452 ist eine Lösung bekannt, bei der die Zugstränge im wesentlichen außerhalb des Laderaumes liegen. Zwei Zugstränge sind an den beiden Seitenwänden in mehreren Trumen verlegt. Jeweils ein Trum verläuft in einer durch ein mitgeführtes Band abgedeckten Rinne des Ladebodens und ein anderer in dem Laderaum, aber oben über dem Gut. Im übrigen ist der Strang unter dem Ladeboden und auf der dem Gut abgekehrten Seite der Vorderwand an dieser geführt.

Diese Strangführung ist verhältnismäßig kompliziert. Sie hält außerdem die Vorderwand nicht unter allen Umständen in ihrer senkrechten oder leicht geneigten Ausrichtung.

Der Erfindung liegt die Aufgabe zugrunde, eine Vorderwand eines Lastfahrzeuges, ggf. auch eine Zwischenwand, durch Mittel zu verschieben, die sie sicher in senkrechter oder leicht geneigter Ausrichtung halten und im wesentlichen außerhalb des Laderaumes liegen.

Die Erfindung macht zu diesem Zweck von den eingangs angegebenen Mitteln Gebrauch und sieht vor, daß die Schienen und der Antrieb unter der Ladebodenoberfläche verlaufen und die Schuhe durch einen Steg mit der Vorderwand bzw. Zwischenwand verbunden sind, der jeweils einen zu den Schienen parallelen Schlitz in der Ladebodenoberfläche durchragt.

Die Führung sichert die Ausrichtung der Vorderwand oder Zwischenwand. Der Antrieb liegt außerhalb des Laderaumes; Zugstränge als Antrieb verlaufen im Bewegungsraum der Schuhe.

Es sind jedoch auch andere Antriebe möglich. Beispielsweise könnte unter der Führung eine Welle verlaufen, die eine Reihe von Antriebsritzeln antreibt, die in etwas geringerem Abstand als die Länge des Schuhs beträgt angeordnet sind und in eine Zahnleiste an der Unterseite des Schuhs fassen. Auch ein Spindelantrieb wäre denkbar.

Vorzugsweise und in aller Regel wird man dabei den Schlitz wiederum in der oben erwähnten, bekannten Weise durch ein Band abdecken, dessen beide Enden auf den beiden verschiedenen Seiten der Vorderwand, nunmehr an den Schuhen, befestigt sind und das am hinteren und am vorderen Ende des Ladebodens unter diesen umgelenkt ist, wo es im übrigen entlanggeführt ist. Das Band kann dabei zweckmäßigerweise in flachen Absätzen des Ladebodens liegen und mit der Ladebodenoberfläche fluchten.

Mit dieser Abdeckung ist die Führung über ihre Anordnung außerhalb des Laderaums hinaus von diesem abgetrennt. Sie bleibt grundsätzlich von dem Gut frei.

Als Schienen der Führung werden nach oben offene C-Profile vorgeschlagen. Sie umfassen den Schuh bis auf den Schlitz für den Steg allseitig; es ergibt sich eine günstige Kraftaufnahme.

Möglich wären beispielsweise aber auch zwei einander zugekehrte, unten verbundene C-Profile oder entsprechend angeordnete Doppel-T-Profile. Sie hätten den Vorteil, daß durch die Abdeckung mit den Bändern dringender Schmutz auch ausfallen kann.

Weitere Maßnahmen, die zur vorteilhaften Ausgestaltung der Erfindung dienen können, sind in der folgenden Beschreibung von Ausführungsbeispielen angegeben.

Als Vorteil der Erfindungsmaßnahme gegenüber dem erwähnten Stand der Technik ist im übrigen noch zu nennen, daß die nicht mehr für die Führung der Vorder- oder Zwischenwand sowie ihren Verschiebeantrieb benutzten Seitenwände nun abgeklappt oder ganz entfernt werden können und sich damit weitere Benutzungsmöglichkeiten eröffnen.

Die Zeichnungen geben die Ausführungsbeispiele wieder.

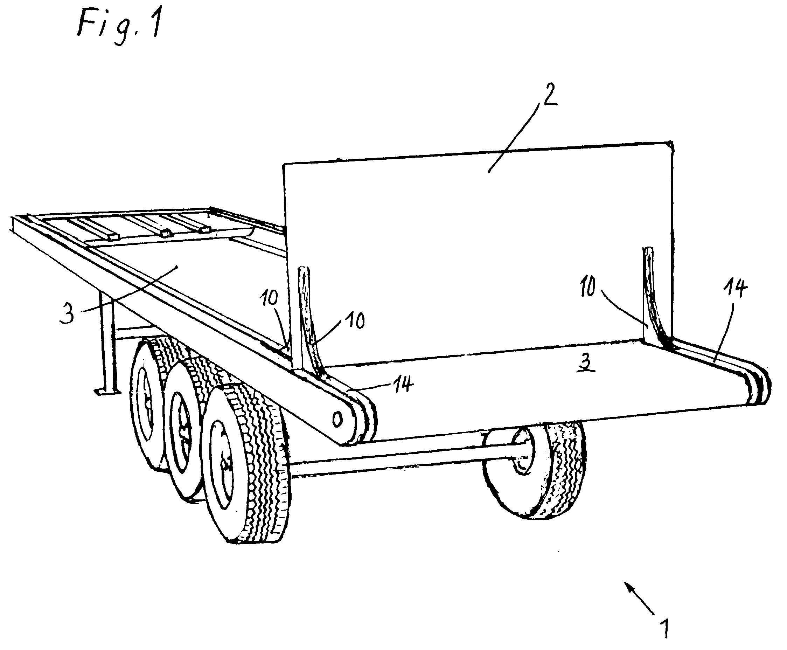

Sie zeigen in Fig. 1 bis 13 jeweils in perspektivischer Darstellung bzw. Seitenansicht Ausschnitte aus Lastfahrzeugen bzw. Lastfahrzeuge.

In Fig. 1 ist ein Sattelaufleger 1 ohne Seitenwände und Rückwand dargestellt.

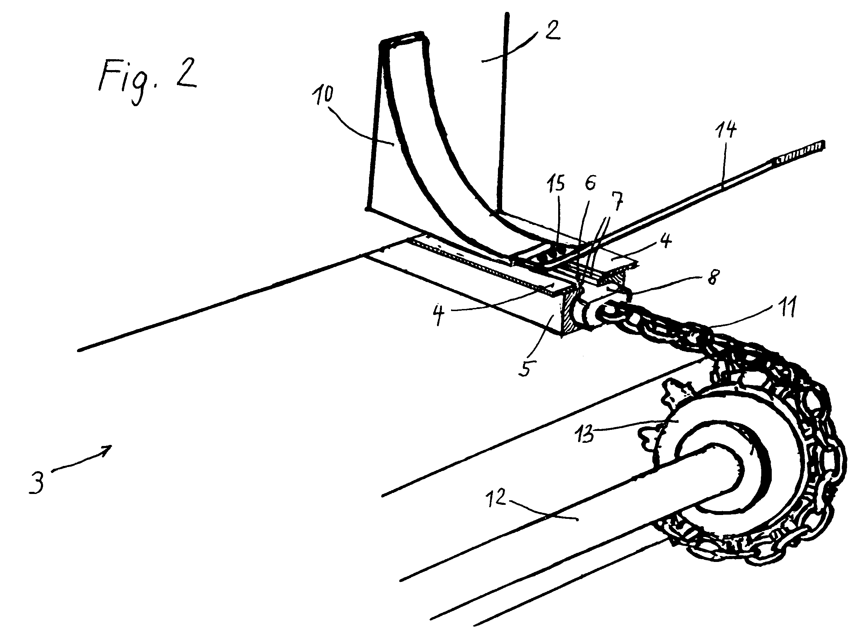

Seine Vorderwand 2 ist in der aus Fig. 2 ersichtlichen Weise gehalten und geführt:

Entlang der beiden Seitenränder des Ladebodens 3 verlaufen unter einem dessen Oberfläche bildenden Bodenblech 4 zwei C-Profile 5 aus Stahl. Die Öffnung der C-Profile liegt nach oben. Darüber befindet sich auch in dem Bodenblech 4 ein Schlitz 6. Der Schlitz 6 ist etwas breiter als die Öffnung der C-Profile, so daß sich ein Absatz 7 von der Höhe der Blechdicke ergibt.

In den C-Profilen 5 ist jeweils ein Gleitschuh 8 geführt. Er hat einen zu dem Innenquerschnitt des C-Profils komplementären Querschnitt und ragt mit einem nicht in Fig. 1 und 2, aber z.B. in Fig. 3 sichtbaren Steg 9 durch die Öffnung des C-Profils 5 und den Schlitz 6 des Bodenblechs 4 hindurch nach oben heraus, wo er in zwei die Vorderwand 2 zwischen sich aufnehmende Stützen 10 übergeht. Die, im ganzen dreieckigen, Stützen 10 sind wieder breiter als die Stege 9 und liegen auf dem Bodenblech 4. Sie könnten auch gerade zwischen die Absätze 7 passen.

An den beiden verschiedenen Seiten der Gleitschuhe 8 sind die beiden Enden von Ketten 11 befestigt, die in den C-Profilen 5 verlaufen und am hinteren und am vorderen Ende des Ladebodens 3 unter diesen umgelenkt sind durch zwei mittels einer Achse 12 zwangssynchronisierte Kettenräder 13. Im übrigen sind die Ketten 11 unter dem Ladeboden 3 entlanggeführt. Sie sind mit einem Antrieb versehen, der beispielsweise an der vorderen der beiden Achsen 12 angreift.

In den Schlitzen 6 des Bodenblechs 4 liegen, mit den Absätzen 7 als Auflager und Führung, zwei parallel zu den Ketten 11 angeordnete und umgelenkte Bänder 14, deren Enden bei 15 gleichfalls an den Gleitschuhen 8 befestigt sind. Die Bänder 14 laufen über die Kettenräder 13 mit den Ketten 11 auf diese überdeckenden Gleitblechen. Es kann auch, wie in Fig. 1 dargestellt, das Bodenblech 4 durchgehend über die Achse 12 und die Kettenräder 13 hinweg gelegt sein. Das in Fig. 2 erscheinende Band 14 ist abgeschnitten und abgehoben gezeichnet.

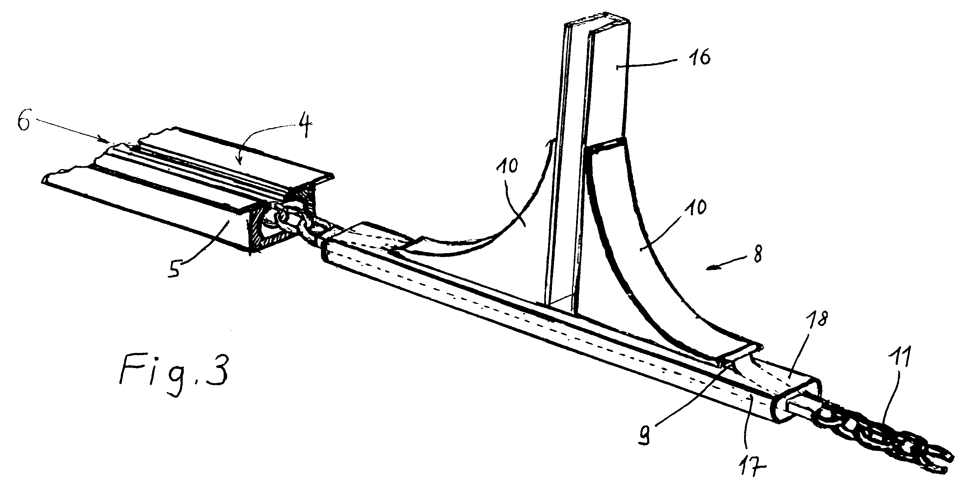

Fig. 3 zeigt gegenüber Fig. 1 und 2 die Abwandlung, daß der Gleitschuh 8 (einander entsprechende Teile verschiedener Ausführungsbeispiele sind in dieser Beschreibung auch im Falle von Abwandlungen mit gleichen Bezugszeichen versehen) die Vorderwand 2 nicht unmittelbar, sondern in einer seitlichen Einfassung 16 aufnimmt, in die sie einsetzbar ist. Ferner ist in Fig. 3 die Möglichkeit dargestellt, einen Kern 17 des Gleitschuhes 8 zusammen mit dem Steg 9 und den Stützen 10 aus Stahl herzustellen und den übrigen Teil 18 aus einem anderen Material, beispielsweise einem gleitfähigen Kunststoff, herzustellen. Die C-Profile 5 könnten dann auch aus Aluminium bestehen, jedenfalls für die den Transport leichter Güter.

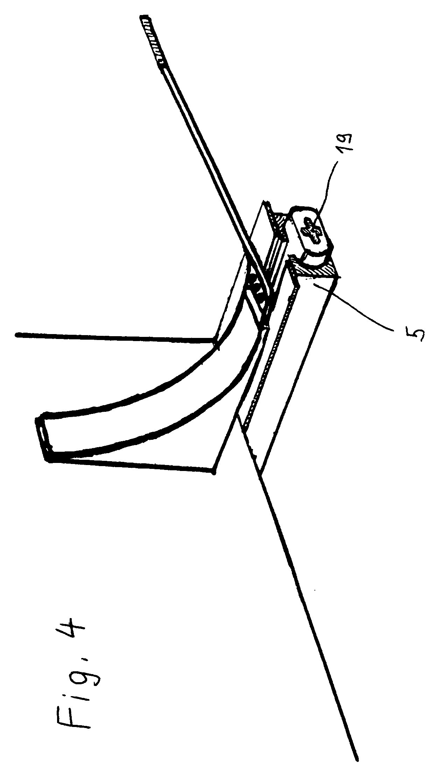

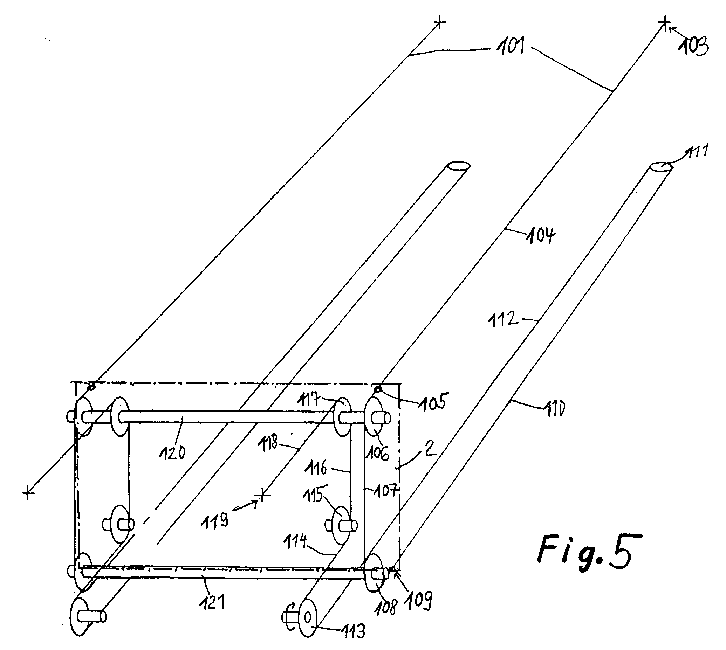

Fig. 4 zeigt eine Abwandlung, bei der die Gleitschuhe Längsdurchlässe 19 aufweisen für eine Zugstrangführung mit mehreren Trumen, die in anderer Weise an der Vorderwand 2 angreift. Die Längsdurchlässe haben für Ketten als Zugstränge kreuzförmigen Querschnitt.
Ein Beispiel für eine derartige Zugstrangführung, mit Seilen, ist aus Fig. 5 ersichtlich. Zwei Zugstränge 101 verlaufen jeweils von einem Befestigungspunkt 103 am hinteren Ende der Seitenwand des Lastfahrzeugs oben mit einem Trum 104 in gleichbleibender Höhe, bei nicht randvoller Füllung oberhalb des Ladegutes, entlang der Seitenwand nach vorne, durchsetzen in einer Ausnehmung 105 die Vorderwand 2, gehen über eine Umlenkrolle 106 in einen senkrechten Trum 107 über, kehren über eine Umlenkrolle 108 nach vorne zurück, durchsetzen die Gleitschuhe in einem den Längsdurchlaß 19 entsprechenden Durchlaß runden Querschnitts, verlaufen in dem C-Profil 5 mit einem Trum 110 nach hinten, werden am hinteren Ende der Ladefläche durch eine dem Kettenrad 13 entsprechende Umlenkrolle 111 um 180° umgelenkt, verlaufen mit einem Trum 110 eng unter der Ladefläche zurück bis zum vorderen Ende des Aufbaus, werden dort durch eine Antriebsrolle 113 nach oben und dann wieder zur Vorderwand 2 hin in einen Trum 114 umgelenkt, gehen an der Vorderseite über eine Umlenkrolle 115 in einen nach oben führenden Trum 116 über und sind dann über eine Umlenkrolle 117 gelegt, hinter der sie mit einem Trum 118 zu ihrem anderen Befestigungspunkt 119 am vorderen Ende des Aufbaues führen. Die Umlenkrollen 106 und 117 sitzen, zusammen mit denjenigen des anderen Zugstranges, auf einer gemeinsamen Welle 120. Die Umlenkrollen 108 der beiden Zugstränge 101 sitzen auf einer gemeinsamen Welle 121. Das Ausführungsbeispiel nach 104, 105 ist besonders für vergleichsweise schweres Ladegut geeignet. Der Kraftfluß verläuft von der Vorderwand 2 nicht ausschließlich in die Gleitschuhe, sondern weitestgehend in die Trume 104 und 112. Die Gleitschuhe sichern aber die senkrechte o.ä. Ausrichtung der Vorderwand 2.

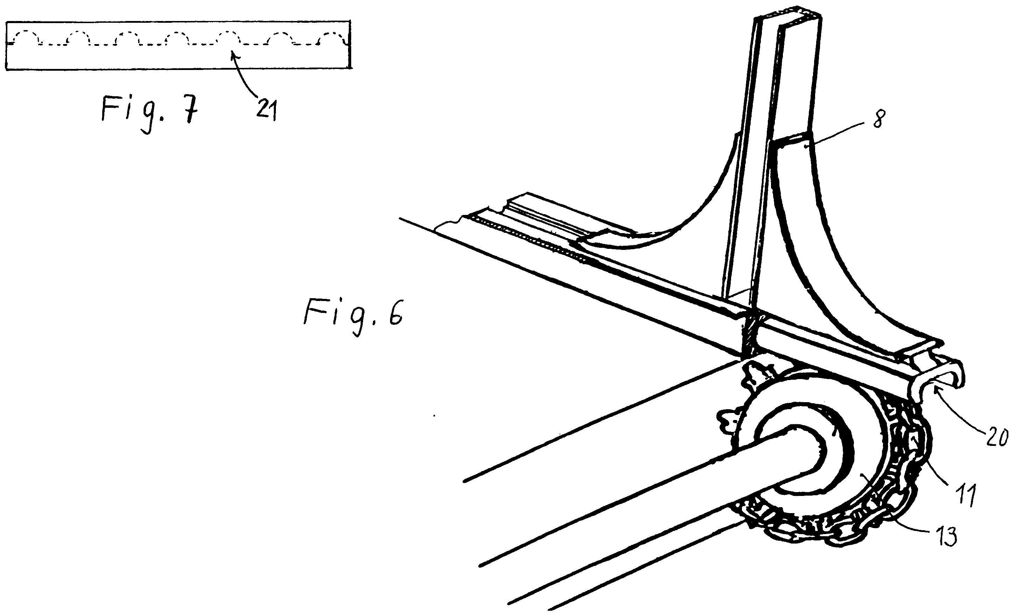

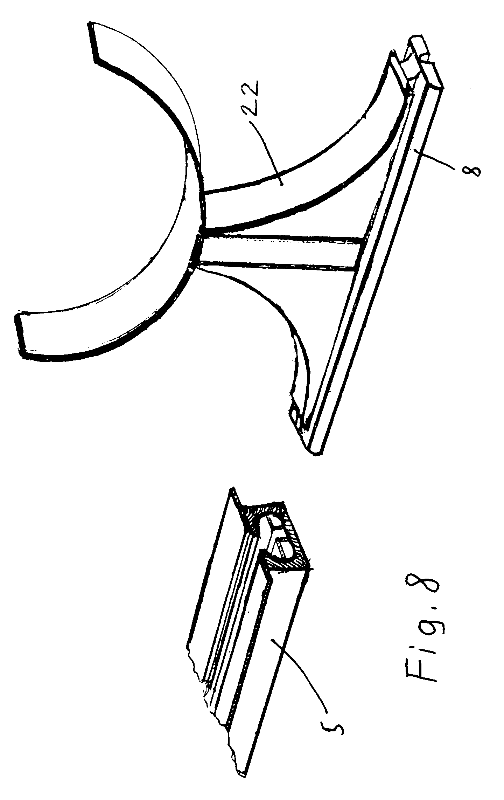

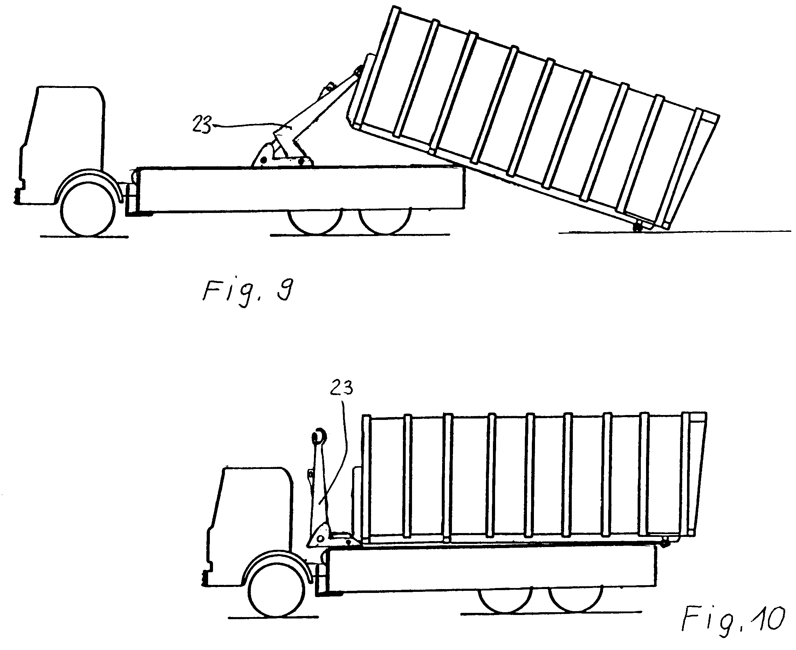

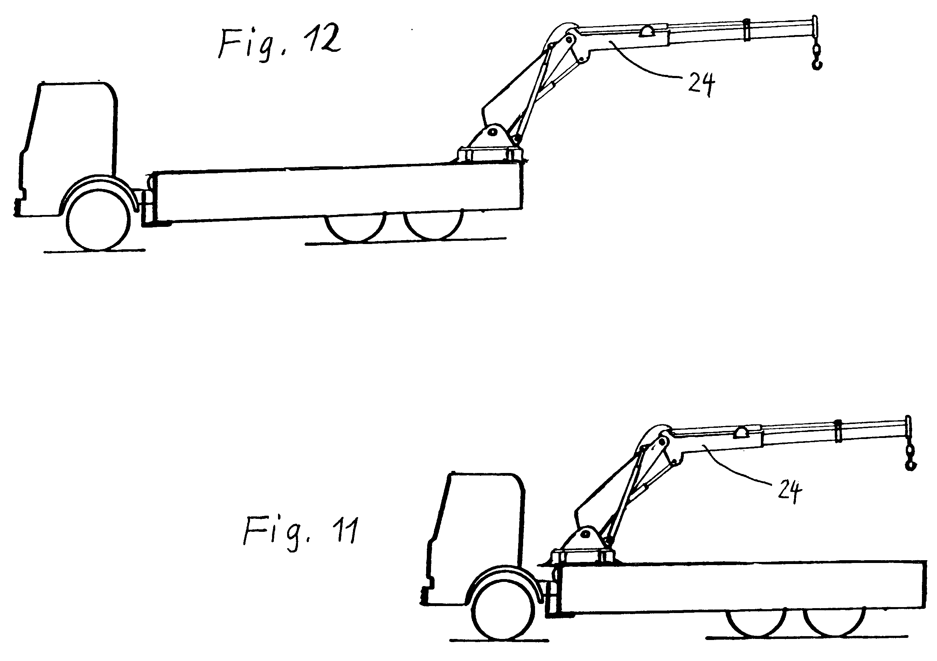

Nach Fig. 6 weisen die Gleitschuhe 8 nach unten offene Längsausnehmungen 20 auf, mit denen sie formschlüssig auf die Ketten 11 fassen. Eine entsprechende Innenkontur 21 des Gleitschuhes 8 ist in Fig. 7 angedeutet.
Diese Ausgestaltung erlaubt, sofern vorhanden bei abgenommenen Bändern 14 und abgenommener Verkleidung der Kettenräder 13, ein Herausnehmen der Gleitschuhe zum Säubern und Reparieren der Gleitschuhe wie der Führung sowie ein einfaches und schnelles Auswechseln der Gleitschuhe 8 mit der Vorderwand 2 gegen andere Einrichtungen. Die Gleitschuhe können einfach über die Kettenräder 13 hinweg ausgefahren und eingefahren werden.
Als Beispiele für solche andere Einrichtungen sind in Fig. 8 eine Tragmulde 22 z.B. für Betonrohre, in Fig. 9 und 10 eine Heb- und Zugvorrichtung 23 zum Auf- und Abladen eines Containers in Fig. 11 und 12 ein Kran 24 in Transportstellung bzw. Betriebsstellung dargestellt.
Fig. 8 zeigt im übrigen eine weitere Variante des Hohlquerschnitts der C-Profile 5 und des Querschnitts der Gleitschuhe 8.

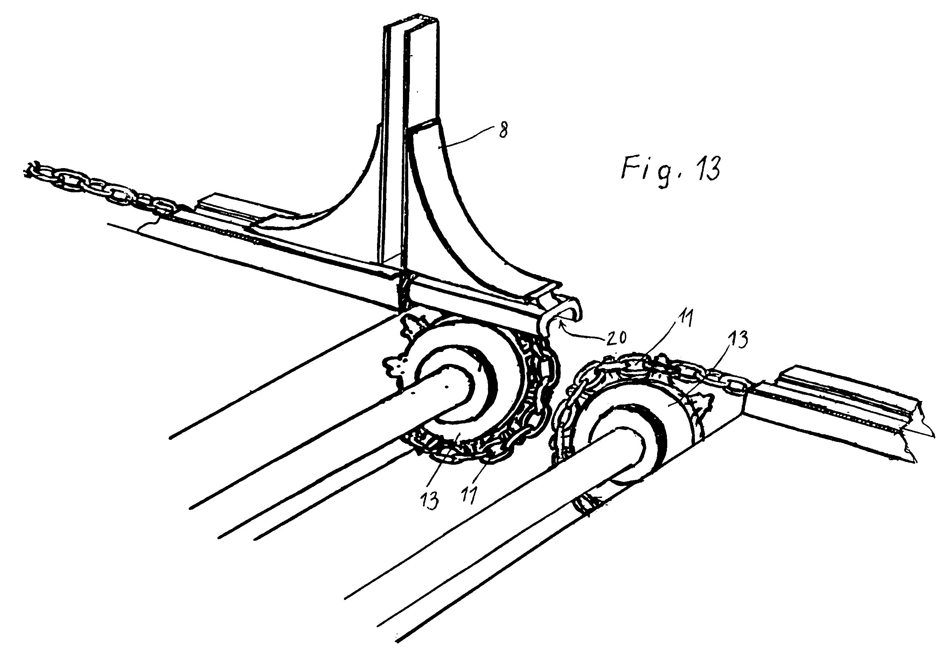

Schließlich verdeutlicht Fig. 13 die Möglichkeit, den Gleitschuh 8 gemäß Fig. 6 und 7 auf ein angesetztes gleiches Lastfahrzeug übergehen zu lassen. Bei Auflegen einer Brücke zwischen den beiden Lastfahrzeugen kann auf diese Weise eine Ladung übertragen werden.

Das erfindungsgemäße Lastfahrzeug erlaubt einen vielseitigen Einsatz mit hohem Ausnutzungsgrad, wie aus dem Vorstehenden hervorgeht.
Es eignet sich z.B. auch besonders zum Transportieren von Müll, zumal es den Müll mittels der Vorderwand oder einer entsprechend angeordneten Zwischenwand verdichten kann.

## Patentansprüche

1. Lastfahrzeug, insbesondere Lastkraftwagen oder Sattelaufleger (1), mit einer Vorderwand (2) oder Zwischenwand, die zum Ausschieben des Gutes auf dem Ladeboden (3) nach hinten und wieder zurück mittels eines Antriebs (11-13) verschiebbar ist, wobei ihre Ausrichtung durch eine Führung (5,8) erhalten bleibt, die aus mindestens zwei an der Vorderwand bzw. Zwischenwand angebrachten Schuhen, insbesondere Gleitschuhen (8), und an dem übrigen Fahrzeugaufbau angeordneten Schienen (5) besteht, mit denen die Schuhe (8) zusammenwirken,
dadurch gekennzeichnet,
daß die Schienen (5) und der Antrieb (11-13) unter der Ladebodenoberfläche (4) verlaufen und die Schuhe (8) durch einen Steg (9) mit der Vorderwand (2) bzw. Zwischenwand verbunden sind, der jeweils einen zu den Schienen (5) parallelen Schlitz (6) in der Ladebodenoberfläche (4) durchragt.

2. Lastfahrzeug nach Anspruch 1,
dadurch gekennzeichnet,
daß Zugstränge (11) als Antrieb in dem Bewegungsraum (5) der Schuhe (8) verlaufen.

3. Lastfahrzeug nach Anspruch 1 oder 2,
dadurch gekennzeichnet,
daß der Schlitz (6) durch ein Band (14) abgedeckt ist, dessen beide Enden an den beiden verschiedenen Seiten der Schuhe (8) befestigt sind und das am hinteren und am vorderen Ende des Ladebodens (3) unter diesen umgelenkt ist, wo es im übrigen entlanggeführt ist.

4. Lastfahrzeug nach Anspruch 3,
dadurch gekennzeichnet,
daß das Band (14) in flachen Absätzen (7) des Ladebodens (3) liegt und mit der Ladebodenoberfläche fluchtet.

5. Lastfahrzeug nach einem der Ansprüche 1 bis 4,
gekennzeichnet durch entlang der beiden Seitenwänden des Ladebodens (3) verlaufende Schienen (5).

6. Lastfahrzeug nach einem der Ansprüche 1 bis 4,
dadurch gekennzeichnet,
daß die Schienen nach oben offene C-Profile (5) sind.

7. Lastfahrzeug nach einem der Ansprüche 2 bis 6,
dadurch gekennzeichnet,
daß die beiden Enden der Zugstränge (11) an den beiden verschiedenen Seiten der Schuhe (8) befestigt sind und am hinteren und am vorderen Ende des Ladebodens (3) unter diesen umgelenkt sind, wo sie im übrigen entlanggeführt sind.

8. Lastfahrzeug nach einem der Ansprüche 2 bis 6,
dadurch gekennzeichnet,
daß für eine Zugstrangführung mit mehreren Trumen (Fig. 5) die Schuhe (8) Längsdurchlässe (19) für die Zugstränge (101) aufweisen, im Falle von Ketten (11) als Zugsträngen mit kreuzförmigem Querschnitt.

9. Lastfahrzeug nach einem der Ansprüche 2 bis 6,
dadurch gekennzeichnet,
daß die Schuhe (8) nach unten offene Längsausnehmungen (20) aufweisen, mit denen sie formschlüssig auf Ketten (11) als Zugstränge fassen.

10. Lastfahrzeug nach Anspruch 8,
dadurch gekennzeichnet,
daß Schuhe (8) mit anderen Einrichtungen (22;23;24) zum Austausch gegen die Vorderwand (2) bzw. Zwischenwand vorgesehen sind, insbesondere mit speziellen Trageinrichtungen (22), mit einer Heb- und Zugvorrichtung (23) für Container oder mit einem Kran (24).

## Claims

1. A utility vehicle, particularly a lorry or semitrailer (1), having a front wall (2) or partition which is displaceable back and forth by drive means (11-13) to push out the load on the floor (3), the alignment of said front wall being maintained by guide means (5, 8) comprising at least two shoes, particularly sliding blocks (8) attached to said front wall or partition, and further comprising rails (5) mounted on the remaining vehicle structure and interacting with said shoes (8),
characterised in that
the rails (5) and the drive means (11-13) run beneath the floor surface (4), and the shoes (8) are connected to the front wall (2) or partition by a projection (9) extending through a slot (6) in the floor surface (4) parallel to the rails (5).

2. The utility vehicle according to claim 1,
characterised in that
traction lines (11) serving as drive means run in the space (5) for movement of the shoes (8).

3. The utility vehicle according to claim 1 or 2,
characterised in that
the slot (6) is covered by a belt (14) attached by its two ends to the two different sides of the shoe (8) and deflected downward at the front and rear ends of the floor (3), along which it is also guided.

4. The utility vehicle according to claim 3,
characterised in that
the belt (14) lies on shallow ledges (7) in the floor (3) and lies flush with the floor surface.

5. The utility vehicle according to any of claims 1 to 4,
characterised by rails (5) extending along the two side walls of the floor (3).

6. The utility vehicle according to any of claims 1 to 4,
characterised in that the rails have C-profiles (5) open at the top.

7. The utility vehicle according to any of claims 2 to 6,
characterised in that
the traction lines (11) are attached by their two ends to the two different sides of the shoe (8) and are deflected downward at the front and rear ends of the floor (3), along which they are also guided.

8. The utility vehicle according to any of claims 2 to 6,
characterised in that
in a pulley system with a plurality of strands (Fig. 5) the shoes (8) have longitudinal passageways (19) for the traction lines (101), said passageways having a cross-shaped cross section when the traction lines are chains (11).

9. The utility vehicle according to any of claims 2 to 6,
characterised in that
the shoes (8) have longitudinal recesses (20) open at the bottom, by means of which they positively engage chains (11) serving as traction lines.

10. The utility vehicle according to claim 8,
characterised in that
shoes (8) are provided with other devices (22; 23; 24) to be exchanged with the front wall (2) or partition, said devices comprising in particular special carrying means (22), a hoisting or pulling device (23) for containers, or a crane (24).

## Revendications

1. Véhicule utilitaire, en particulier camion ou semi-remorque (1), présentant une paroi avant (2) ou paroi intermédiaire, qui peut être déplacée,pour faire glisser les marchandises, sur le fond de chargement (3) vers l'arrière et retour à l'aide d'un dispositif d'entraînement (11-13), son orientation restant maintenue grâce à un dispositif de guidage (5, 8) qui est constitué par au moins deux sabots, en particulier des patins (8), disposés au niveau de la paroi avant ou de la paroi intermédiaire, et par des rails (5), disposés sur le reste de la construction du véhicule avec lesquels les sabots (8) interagissent, caractérisé en ce que les rails (5) et le dispositif d'entraînement (11-13) s'étendent sous la surface du fond de chargement (4) et en ce que les sabots (8) sont reliés via un talon (9) à la paroi avant (2) ou paroi intermédiaire, qui pénètre dans une fente (6) parallèle aux rails (5) dans la surface du fond de chargement (4).

2. Véhicule selon la revendication 1, caractérisé en ce que des câbles ou des chaînes de traction (11) s'étendent comme dispositif d'entraînement dans l'espace (5) de la route des sabots (8).

3. Véhicule selon la revendication 1 ou 2, caractérisé en ce que la fente (6) est recouverte par une bande (14), dont les deux extrémités sont fixées aux deux côtés du sabot (8) et qui est repliée sous le fond de chargement (3), en l'extrémité avant et arrière de celui-ci, en étant pour le reste guidée le long dudit fond.

4. Véhicule selon la revendication 3, caractérisé en ce que la bande (14) est placée dans des épaulements (7) plats du fond de chargement (3) en affleurant la surface du fond de chargement.

5. Véhicule selon une quelconque des revendications 1 à 4, caractérisé par des rails (5) qui s'étendent le long des deux parois latérales du fond de chargement (3).

6. Véhicule selon une quelconque des revendications 1 à 4, caractérisé en ce que les rails sont des profils en C (5) ouverts vers le haut.

7. Véhicule selon une quelconque des revendications 2 à 6, caractérisé en ce que les deux extrémités des câbles ou des chaînes de traction (11) sont fixées des deux côtés des sabots (8) et en ce qu'ils sont repliés sous le fond de chargement (3), en l'extrémité avant et arrière de celui-ci, en étant pour le reste guidés le long dudit fond.

8. Véhicule selon une quelconque des revendications 2 à 6, caractérisé en ce que les sabots (8) présentent, pour un guidage par câbles ou chaînes de traction avec plusieurs bouts de câble (fig. 5), des passages longitudinaux (19) pour les câbles ou les chaînes de traction (101), dans le cas de chaînes (11) de traction présentant une section en forme de croix.

9. Véhicule selon une quelconque des revendications 2 à 6, caractérisé en ce que les sabots (8) présentent des évidements longitudinaux (20) ouverts vers le bas avec lesquels ils entourent mécaniquement des chaînes (11) de traction.

10. Véhicule selon la revendication 8, caractérisé en ce que des sabots (8) sont équipés d'autres équipements (22, 23, 24) qui remplacent la paroi avant (2) ou paroi intermédiaire, en particulier de dispositifs de support (22) particuliers, d'un dispositif de levage et de traction (23) pour des conteneurs ou d'une grue (24).
